# EUROPÄISCHE PATENTSCHRIFT

(11) **EP 2 790 861 B1**
(45) Veröffentlichungstag und Bekanntmachung des Hinweises auf die Patenterteilung: **20.04.2016**
(21) Anmeldenummer: 12797885.6
(22) Anmeldetag: 04.12.2012
(51) Int. Cl.: B23C 5/22

(54) **WENDESCHNEIDPLATTE UND WERKZEUG FÜR DIE SPANENDE BEARBEITUNG**
INDEXABLE INSERT AND TOOL FOR MACHINING
PLAQUETTE DE COUPE AMOVIBLE ET OUTIL D'USINAGE PAR ENLÈVEMENT DE COPEAUX

(30) Priorität: 14.12.2011 DE 102011056422
(43) Veröffentlichungstag der Anmeldung: 22.10.2014
(73) Patentinhaber: Hartmetall-Werkzeugfabrik Paul Horn GmbH, 72072 Tübingen (DE)
(72) Erfinder: STARK, Christian, 72108 Rottenburg-Hemmendorf (DE); LUIK, Matthias, 72766 Reutlingen (DE); OETTLE, Matthias, 78661 Wellendingen (DE)
(74) Vertreter: Witte, Weller & Partner Patentanwälte mbB
(86) Internationale Anmeldenummer: PCT/EP2012/074377
(87) Internationale Veröffentlichungsnummer: WO 2013/087457

(56) Entgegenhaltungen:
- DE-A1- 1 502 030
- DE-A1- 2 201 237
- DE-A1-102007 022 536
- DE-A1-102008 002 486
- JP-A- 2000 190 107
- JP-U- H0 685 712
- US-A1- 2008 226 403

## Beschreibung

Die vorliegende Erfindung betrifft eine Wendeschneidplatte gemäß dem Oberbegriff des Anspruchs 1 für ein Werkzeug zur spanenden Bearbeitung eines Werkstücks. Des Weiteren betrifft die vorliegende Erfindung ein Werkzeug zur spanenden Bearbeitung eines Werkstücks, mit einem Werkzeugkörper, welcher mindestens eine Schneidplattenaufnahme aufweist, in der eine erfindungsgemäße Wendeschneidplatte lösbar befestigt ist.

Eine solche Wendeschneidplatte ist aus der DE 15 02 030 A1 bekannt.

Wendeschneidplatten dieser Art kommen meist bei Anwendungen zur Metallbearbeitung, insbesondere bei Fräs- oder Drehanwendungen, zum Einsatz. Um den Verschleiß möglichst gering zu halten, den sehr hohen bei der Bearbeitung auftretenden Schnittkräften standzuhalten und eine möglichst hohe Präzision zu gewährleisten, werden diese Wendeschneidplatten zumeist aus Hartmetall hergestellt. Fräswerkzeuge, bei denen derartige Wendeschneidplatten zum Einsatz kommen, umfassen typischerweise einen rotationssymmetrischen Werkzeughalter, an dem umfangsseitig zumindest eine, meist jedoch eine Vielzahl dieser Wendeschneidplatten lösbar befestigt sind.

Das Abtragen von Material am Werkstück während des Fräsvorgangs wird durch hochpräzise Schneiden bzw. Schneidkanten, welche in die Wendeschneidplatten eingeformt sind, gewährleistet. Durch die hohe Materialbeanspruchung verschleißen die Schneidkanten im Laufe der Zeit. Insbesondere bei Fräsbearbeitungen, die eine hohe Präzision voraussetzen, müssen die Wendeschneidplatten daher nach einer gewissen Zeit ausgetauscht werden.

Um zu verhindern, dass die relativ teuren Wendeschneidplatten jedes Mal gesamthaft ausgetauscht werden müssen, wenn die verwendete Schneide verschlissen ist, wurden mehrseitige Wendeschneidplatten entwickelt, welche mehrere symmetrisch zueinander angeordnete Schneiden aufweisen. Eine derartige Wendeschneidplatte mit vier identischen, symmetrisch zueinander angeordneten Hauptschneiden ist beispielsweise aus der EP 1 572 407 B1 bekannt.

Die darin gezeigte Wendeschneidplatte ist bezüglich ihrer drei Hauptachsen jeweils 180° drehsymmetrisch ausgebildet. Sobald die verwendete Hauptschneidkante verschlissen ist, lässt sich die Wendeschneidplatte daher um 180° drehen und/oder wenden und in der neuen Position im Werkzeughalter befestigen. Beim Verschleiß einer der vier Hauptschneidkanten muss somit die Wendeschneidplatte nicht gesamthaft ausgetauscht werden, sondern nur im Halter gedreht bzw. gewendet werden, so dass die Bearbeitung mit den bisher nicht verwendeten, unverschlissenen Hauptschneidkanten fortgesetzt werden kann.

Aufgrund der Symmetrieeigenschaften der Wendeschneidplatte, bei der jede Hauptschneidkante die gleiche Schneidengeometrie aufweist, werden durch das Wenden bzw. Drehen der Wendeschneidplatte die Schnitteigenschaften nicht verändert. Mit anderen Worten lässt sich somit ein und dieselbe Wendeschneidplatte viermal verwenden, bis alle Schneidkanten verschlissen sind und die Wendeschneidplatte entsorgt werden muss.

Im Gegensatz zu einfachen, nicht wendbaren Schneidplatten bieten derartige Wendeschneidplatten eine wesentlich höhere Flexibilität und können, dadurch dass sie mehrfach verwendbar sind, wesentlich länger verwendet werden, ohne dass dies mit Einbußen bei der Bearbeitungsgenauigkeit einhergeht. Wenngleich derartige vierschneidige Wendeschneidplatten deutlich komplexer in der Herstellung sind als herkömmliche, einschneidige (nicht wendbare) Schneidplatten, erweisen sich diese nicht nur als geschickter, sondern in der Gesamtbetrachtung auch als kostengünstiger für deren Abnehmer.

Aus Sicht des Herstellers solcher Wendeschneidplatten besteht die konstruktive Problematik jedoch nicht nur darin, die Symmetrieeigenschaften solcher Wendeschneidplatten mit mehreren identischen Schneiden zu realisieren, sondern gleichzeitig auch dafür zu sorgen, dass jede dieser Schneiden gleiche Bearbeitungseigenschaften aufweist und dadurch identisch verwendbar ist. Die größte Problematik besteht dabei oft darin, mögliche Kollisionen mit anderen Bauteilen der Schneidplatte oder des Werkzeughalters zu vermeiden und für einen sicheren Sitz der Schneidplatte in der Werkzeugaufnahme des Werkzeugkörpers zu sorgen, so dass eine optimale Krafteinleitung gewährleistet ist. Es erscheint einleuchtend, dass derartige Voraussetzungen bei Wendeschneidplatten mit mehreren, wechselweise verwendbaren Schneidkanten schwieriger zu realisieren sind, als dies bei herkömmlichen Schneidplatten mit nur einer Schneidkante der Fall ist.

Nichtsdestotrotz haben sich derartige Wendeschneidplatten mit mehreren Schneidkanten als überaus vorteilhaft herausgestellt. Wendeschneidplatten mit mehr als vier identischen Hauptschneiden sind bisher jedoch nicht, oder teilweise nur für andere Anwendungen bekannt. Zumindest sind keine Wendeschneidplatten mit mehr als vier identischen Hauptschneiden bekannt, welche problemlos, insbesondere für das Tangentialnutfräsen geeignet sind. Dies liegt insbesondere daran, dass es bisher nicht gelungen ist, obige Eigenschaften bei gleichbleibend hoher Bearbeitungsgenauigkeit zu gewährleisten, da die konstruktive Komplexität mit der Anzahl an identischen, wechselweise verwendbaren Schneidkanten enorm ansteigt.

Der Erfindung liegt die Aufgabe zugrunde, eine Wendeschneidplatte der eingangs genannten Art bereitzustellen, die im Gegensatz zum Stand der Technik eine weiter erhöhte Flexibilität bietet und den Einsatz von noch mehr wechselseitig verwendbaren Schneidkanten erlaubt, so dass die Wendeschneidplatte über einen noch längeren Zeitraum verwendbar ist, bevor alle Schneidkanten verschlissen sind.

Diese Aufgabe wird, ausgehend von der eingangs genannten Wendeschneidplatte, dadurch gelöst, dass die Wendeschneidplatte um eine Bohrungsachse, die senkrecht und zentral durch zwei sich gegenüberliegende Stirnflächen der Wendeschneidplatte verläuft, 120° drehsymmetrisch ist, und zwei miteinander verbundene, identische Teilkörper aufweist, welche jeweils drei im Winkel von 60° zueinander und in einer Ebene angeordnete identische Hauptschneiden umfassen, die parallel zu den beiden gegenüberliegenden Stirnflächen und windschief zur Bohrungsachse verlaufen, wobei die beiden Teilkörper zum einen spiegelverkehrt zueinander ausgestaltet sind gegenüber einer Spiegelebene, welche senkrecht zur Bohrungsachse verläuft und den gleichen Abstand zu beiden Stirnflächen hat, und zum anderen zusätzlich noch um einen definierten Verdrehwinkel um die Bohrungsachse gegenüber einander verdreht sind, wobei die drei Hauptschneiden jedes Teilkörpers der Wendeschneidplatte als Schneidkanten am Übergang zwischen der Stirnfläche des jeweiligen Teilkörpers und jeweils einer quer zur jeweiligen Stirnfläche angeordneten Spanfläche ausgebildet sind, wobei die jeweilige Spanfläche unter einem definierten Spanwinkel gegenüber der Bohrungsachse gekippt ist, wobei zwischen der Spiegelebene und den Spanflächen jedes Teilkörpers jeweils eine parallel zur Bohrungsachse verlaufende Anlagefläche ausgebildet ist, und wobei jede Schneidkante endseitig an ihrem ersten Ende durch einen Eckenradius abgerundet ist und an ihrem in Kantenrichtung gegenüberliegenden zweiten Ende einen mit einer Fase versehenen Materialeinschnitt aufweist.

Die obengenannte Aufgabe wird dadurch vollständig gelöst.

Die Erfinder haben erkannt, dass es im Gegensatz zu den aus dem Stand der Technik bekannten Wendeschneidplatten mit vier Schneiden auch möglich ist, eine derartige Wendeschneidplatte mit mehr als vier Schneiden (wie gemäß der vorliegenden Erfindung mit sechs Schneiden) auszubilden, und dabei dennoch zu gewährleisten, dass alle vorgesehenen Schneiden identisch verwendbar sind, ohne dass sich dabei etwas an den Schnitteigenschaften bei der Bearbeitung verändert.

Die vorliegende Erfindung präsentiert eine Wendeschneidplatte mit insgesamt sechs identisch verwendbaren Hauptschneiden. Wenngleich eine Erhöhung der Schneidenanzahl von vier auf sechs Schneiden zunächst einfach erscheint, ist dies aus vielerlei Hinsicht keineswegs als trivial anzusehen. Die Schwierigkeit besteht nämlich darin, dass mit zunehmender Anzahl von vorgesehenen Hauptschneiden es deutlich schwieriger ist, die geforderten Symmetrieeigenschaften derart zu gewährleisten, dass die Wendeschneidplatte in allen sechs möglichen Positionen identisch verwendbar ist. Eine weitere Hauptproblematik besteht darin, dass mit zunehmender Anzahl der Hauptschneiden die Gefahr immens zunimmt, dass es bei der Bearbeitung zu unerwünschten Kollisionen von Bauteilen der Wendeschneidplatte mit dem zu bearbeitenden Werkstück kommen kann. Für eine exakte Bearbeitung ist es nämlich notwendig, dass nur eine der Hauptschneiden das Werkstück berührt bzw. dieses spanend bearbeitet.

Gemäß der vorliegenden Erfindung wurde dies dadurch gelöst, dass die Wendeschneidplatte gegenüber einer zentralen Bohrungsachse 120° drehsymmetrisch ist. An dieser Stelle ist festzuhalten, dass im Sinne der Erfindung "120° drehsymmetrisch" bedeutet, dass sich die Wendeschneidplatte bei Rotation um 120° um die zentrale Bohrungsachse auf sich selbst abbildet. Die Wendeschneidplatte weist mit anderen Worten somit drei identische Teilstücke auf, welche jeweils im Winkel von 120° um die Bohrungsachse gesehen zueinander angeordnet sind. Das Wort "Teilstück" weist dabei nicht auf separate Bauteile der Wendeschneidplatte hin, sondern bringt lediglich zum Ausdruck, dass die Wendeschneidplatte geometrisch betrachtet aus drei identischen Teilstücken besteht.

Die 120° drehsymmetrische Ausbildung der Wendeschneidplatte führt jedoch allein noch nicht zum vorliegenden Erfindungsgegenstand. Um eine hohe Bearbeitungsgenauigkeit zu gewährleisten und unerwünschte Kollisionen mit dem Werkstück zu vermeiden, weist die Wendeschneidplatte zudem zwei identische und integral miteinander verbundene Teilkörper auf, welche gegenüber einer gedachten, senkrecht zur zentralen Bohrungsachse ausgerichteten Spiegelebene zueinander spiegelverkehrt ausgestaltet sind und zusätzlich zu dieser Spiegelung noch um einen definierten Verdrehwinkel um die Bohrungsachse gegenüber einander verdreht sind. Es versteht sich, dass dadurch, dass es sich um identische Teilkörper handelt, weder deren spiegelverkehrte Anordnung noch deren Verdrehung gegenüber einander die oben beschriebenen 120°-Drehsymmetrieeigenschaften verändern.

Die beiden spiegelverkehrt und verdreht zueinander angeordneten Teilkörper weisen jeweils drei im 60°-Winkel zueinander angeordnete Hauptschneiden auf. Durch diese Anordnung hat jeder der beiden Teilkörper der Wendeschneidplatte, in einer Draufsicht betrachtet, im Wesentlichen die Form eines gleichseitigen Dreiecks.

Ähnlich wie die eingangs genannte, aus dem Stand der Technik bekannte Wendeschneidplatte mit vier Schneiden lässt sich die hier vorgestellte Wendeschneidplatte der vorliegenden Erfindung in mehreren unterschiedlichen Positionen an einem entsprechenden Werkzeughalter eines Fräswerkzeugs einsetzen. Im Gegensatz zu der aus dem Stand der Technik bekannten Wendeschneidplatte lässt sich die erfindungsgemäße Wendeschneidplatte jedoch nicht nur in vier, sondern in insgesamt sechs unterschiedlichen Positionen im Werkzeug einsetzen. Aufgrund der Symmetrieeigenschaften kann die erfindungsgemäße Wendeschneidplatte in all diesen sechs Positionen beliebig verwendet werden.

In der Praxis würde man zum Beispiel damit beginnen, die Wendeschneidplatte in einer ersten Position am Werkzeughalter zu befestigen, um zunächst eine der Hauptschneidkanten für die Fräsbearbeitung zu verwenden. Sobald diese Hauptschneide dann verschlissen ist, würde man die Wendeschneidplatte vom Werkzeughalter lösen und entsprechend um 120° um die Bohrungsachse drehen, um die Bearbeitung mit der nächsten Hauptschneide fortzusetzen. Fährt man so fort, lässt sich die Wendeschneidplatte, nachdem alle drei Hauptschneiden eines Teilkörpers der Wendeschneidplatte verschlissen sind, senkrecht zur Bohrungsachse um 180° wenden, um nacheinander die übrigen drei Hauptschneiden des bisher noch nicht eingesetzten zweiten Teilkörpers zu verwenden. Ein und dieselbe Wendeschneidplatte kann somit gleich sechsfach verwendet werden, bevor sie schlussendlich entsorgt werden muss. Eine solche Wendeschneidplatte ist daher nicht nur wesentlich flexibler, sondern auch wesentlich länger verwendbar als herkömmliche, nicht wendbare Schneidplatten. Auch im Gegensatz zu der aus dem Stand der Technik bekannten, vierschneidigen Wendeschneidplatte lässt sich die Verwendungsdauer insgesamt durch die zusätzlichen zwei Schneiden um 50 % steigern. Dies schlägt sich natürlich auch in Bezug auf die Kosten für die Abnehmer derartiger Wendeschneidplatten in positivem Maße nieder.

Der Verdrehwinkel, unter dem die beiden oben beschriebenen Teilkörper der Wendeschneidplatte gegenüber einander verdreht sind, ist vorzugsweise kleiner als 30°. In Bezug auf die Bearbeitungseigenschaften und die zu vermeidenden Kollisionen mit unerwünschten Bauteilen hat sich bei Versuchen der Erfinder herausgestellt, dass insbesondere ein Verdrehwinkel im Bereich von oder exakt von 19° sich als vorteilhaft erweist.

Gemäß der vorliegenden Erfindung sind die drei Hauptschneiden jedes Teilkörpers der Wendeschneidplatte als Schneidkante am Übergang zwischen der Stirnfläche des Teilkörpers und jeweils einer quer zur Stirnfläche angeordneten Spanfläche ausgebildet, wobei die jeweilige Spanfläche unter einem definierten Spanwinkel gegenüber der Bohrungsachse gekippt ist.

Durch die bereits beschriebenen Symmetrieeigenschaften der Wendeschneidplatte existieren somit insgesamt sechs identische Spanflächen, welche jeweils an eine der sechs Hauptschneiden angrenzen. Der genannte Spanwinkel, unter dem diese Spanflächen vorzugsweise gegenüber der Bohrungsachse gekippt ausgestaltet sind, erzeugt jeweils einen entsprechenden effektiven Spanwinkel, unter dem der abgehobene Span an der Wendeschneidplatte abfließen kann. Effektive Spanwinkel im Bereich von 7° oder von exakt 7° haben sich bei der erfindungsgemäßen Wendeschneidplatte als vorteilhaft erwiesen.

Es versteht sich jedoch, dass, je nach Neigung der Wendeschneidplatte innerhalb des Werkzeughalters und Neigung der Spanflächen gegenüber der zentralen Bohrungsachse, sich ebenso auch andere Spanwinkel realisieren lassen. Wichtig ist lediglich, dass die einzelnen (insgesamt sechs) Spanflächen jeweils die gleiche Neigung gegenüber der zentralen Bohrungsachse aufweisen, um die oben beschriebenen Drehsymmetrieeigenschaften nach wie vor gewährleisten zu können.

Gemäß der vorliegenden Erfindung ist zwischen der gedachten Spiegelebene (an der gedachten Grenzfläche zwischen den beiden Teilkörpern) und den Spanflächen jedes Teilkörpers daran angrenzend jeweils eine parallel zur Bohrungsachse verlaufende Anlagefläche ausgebildet. Diese Anlageflächen dienen der Anlage an entsprechenden Anlageflächen am Werkzeughalter, um die Wendeschneidplatte möglichst exakt an diesem zu positionieren. Deren senkrechte Ausbildung parallel zur Bohrungsachse ermöglicht bei der Bearbeitung eine optimale Kraftübertragung der an der Wendeschneidplatte bei der Bearbeitung auftretenden Kräfte in den Werkzeughalter.

Weiterhin ist vorgesehen, dass jede Hauptschneide als Schneidkante ausgebildet ist, die endseitig an ihrem ersten Ende durch einen Eckenradius abgerundet ist und an ihrem in Kantenrichtung gegenüberliegenden zweiten Ende einen mit einer Fase versehenen Materialausschnitt aufweist.

Vorzugsweise sind die drei Hauptschneiden jedes Teilkörpers der Wendeschneidplatte dabei so zueinander angeordnet, dass der Eckenradius einer Hauptschneide an dem mit der Fase versehenen Materialausschnitt der im 60°-Winkel dazu angeordneten, in Richtung um die Bohrungsachse gesehen benachbarten Hauptschneide angrenzt. Die im 60°-Winkel zueinander angeordneten Hauptschneiden jedes Teilkörpers bilden somit nicht exakt ein gleichseitiges Dreieck, sondern sind jeweils in deren Ecken durch einen Eckenradius und einen mit einer Fase versehenen Materialausschnitt voneinander getrennt. Diese Unterbrechung in den Ecken hat im Wesentlichen den Zweck, dass dadurch unerwünschte Kollisionen vermieden werden können. Die geometrische Ausgestaltung der mit Eckenradien und Fasen versehenen Schneidenecken ist dabei so ausgestaltet, dass der Freilauf des Werkzeugs bei der Bearbeitung gewährleistet ist. Dies führt mit anderen Worten dazu, dass lediglich eine der Hauptschneiden beim Fräsen das Werkstück spanend bearbeitet, während die übrigen Hauptschneiden freilaufen.

Um diesen Freilauf insbesondere in den Schneidenecken gewährleisten zu können, steht das mit dem Eckenradius versehene erste Ende einer Hauptschneide vorzugsweise jeweils gegenüber dem zweiten, mit der Fase versehenen Ende der benachbarten Hauptschneide über. Genauer gesagt, sollte das mit dem Eckenradius versehene erste Ende einer Hauptschneide gegenüber dem mit der Fase versehenen zweiten Ende der benachbarten Hauptschneide so hervorstehen, dass das zweite Ende der benachbarten Hauptschneide von einer durch das erste Ende der zuerst genannten Hauptschneide und senkrecht zu deren Kantenrichtung verlaufenden, gedachten Hilfsebene beabstandet ist. In diesem Fall ist nämlich eine bei der Bearbeitung möglicherweise auftretende Kollision mit dem mit der Fase versehenen zweiten Ende der benachbarten, nicht verwendeten Hauptschneide ausgeschlossen. Dieses läuft damit frei.

Die erfindungsgemäße Wendeschneidplatte kommt vorzugsweise bei Tangentialnutfräswerkzeugen zum Einsatz. Diese Tangentialnutfräswerkzeuge haben üblicherweise einen Werkzeughalter, welcher mindestens eine Schneidplattenaufnahme aufweist, in der die erfindungsgemäße Wendeschneidplatte lösbar befestigt ist. Üblicherweise wird die Wendeschneidplatte mit Hilfe einer Schraube am Werkzeughalter bzw. in der Schneidplattenaufnahme befestigt. Wenngleich es grundsätzlich denkbar ist, dass in einem solchen Fräswerkzeug nur eine Wendeschneidplatte verwendet wird, werden bei derartigen Nutfräswerkzeugen meist eine Vielzahl von Wendeschneidplatten verwendet.

Tangentialnutfräswerkzeuge dieser Art weisen einen Werkzeughalter auf, welcher rotationssymmetrisch um eine Drehachse des Werkzeughalters ist. An diesem rotationssymmetrischen Werkzeughalter sind umfangsseitig mindestens eine, in der Praxis jedoch meist mehrere Schneidplattenaufnahmen angeordnet, welche als Einsatztaschen für die Wendeschneidplatte ausgebildet sind. Diese Einsatztaschen weisen eine Grundfläche und senkrecht dazu eine erste und eine zweite Seitenwand auf. Der Normalenvektor der Grundfläche der Einsatztasche ist im Wesentlichen radial vom Werkzeughalter nach außen gerichtet. Er zeigt also von der Drehachse des Werkzeughalters weg. Augrund der weiter unten beschriebenen, bevorzugten Neigung bzw. Verkippung der Grundfläche, ist deren Normalenvektor jedoch nicht exakt in Radialrichtung des Werkzeughalters ausgerichtet, sondern schließt mit dieser einen oder mehrere Neigungswinkel ein. In eingebautem Zustand liegt die Wendeschneidplatte mit einer ihrer Stirnflächen auf der Grundfläche auf und liegt mit mindestens einer der oben beschriebenen Anlageflächen der Wendeschneidplatte an jeder Seitenwand der Einsatztasche an. Je nach Anwendung bzw. geometrischer Ausgestaltung liegt die Wendeschneidplatte mit unterschiedlichen Anlageflächen an korrespondierenden Anlageflächen der Seitenwände der Einsatztasche bzw. der Schneidplattenaufnahme an.

Gemäß einer Ausgestaltung der Erfindung ist es vorgesehen, dass die Wendeschneidplatte mit mindestens einer Anlagefläche des einen Teilkörpers der Wendeschneidplatte an der ersten Seitenwand der Einsatztasche anliegt und mit mindestens einer Anlagefläche des anderen Teilkörpers der Wendeschneidplatte an der zweiten Seitenwand der Einsatztasche anliegt. Wie dies nachfolgend in der Figurenbeschreibung noch näher erläutert wird, ist es beispielsweise möglich, dass ausschließlich die Anlageflächen eines Teilkörpers der Wendeschneidplatte am Werkzeughalter anliegen. Ebenso ist es allerdings auch möglich, dass jeweils eine Anlagefläche jedes Teilkörpers zur Anlage am Werkzeughalter dient, oder sogar die Wendeschneidplatte beiderseits mit jeweils einer Anlagefläche beider Teilkörper am Werkzeughalter anliegt.

Wie bereits beschrieben, sind die Wendeschneidplatten vorzugsweise innerhalb der jeweiligen Schneidplattenaufnahme/Einsatztasche geneigt angeordnet. Gemäß einer Ausgestaltung der vorliegenden Erfindung ist es bevorzugt, dass die Grundfläche der Einsatztasche um eine in der Grundfläche liegende erste Mittelachse, welche parallel zur Drehachse des Werkzeughalters ausgerichtet ist, um einen definierten ersten Neigungswinkel geneigt ist. Dadurch ist die Wendeschneidplatte in der Schneidplattenaufnahme leicht nach hinten in Richtung zum Grund der Schneidplattenaufnahme gekippt angeordnet, wodurch sich ein entsprechender Freiwinkel bzw. Spanwinkel ergibt. Versuche haben ergeben, dass insbesondere Neigungswinkel von 10° zu guten Bearbeitungsergebnissen führen und einen ausreichenden Freilauf der für die Bearbeitung nicht verwendeten Bauteile gewährleistet.

Vorzugsweise ist die Wendeschneidplatte zusätzlich noch um eine weitere Achse, nämlich parallel zur Umfangsrichtung des Werkzeughalters, innerhalb der Schneidplattenaufnahme bzw. Einsatztasche geneigt angeordnet. Eine Ausgestaltung des erfindungsgemäßen Werkzeugs sieht daher vor, dass die Grundfläche der Einsatztasche um eine in der Grundfläche liegende zweite Mittelachse, welche parallel zur Umfangsrichtung des Werkzeughalters ausgerichtet ist, um einen definierten zweiten Neigungswinkel geneigt ist. Dieser zweite Neigungswinkel, welcher vorzugsweise 0,5° bis 3° beträgt, gewährleistet, dass beim Fräsen ein ebener Nutgrund entsteht. Ohne diesen zweiten Neigungswinkel könnte es auch zu Kollisionen, insbesondere in den Schneidenecken, kommen.

Ferner ist bevorzugt vorgesehen, dass die mindestens eine Wendeschneidplatte in der Schneidplattenaufnahme bzw. Einsatztasche derart um die Radialrichtung des Werkzeughalters um einen definierten Schneidenverdrehwinkel verdreht angeordnet ist, dass die zur Bearbeitung verwendete Hauptschneide diesen Schneidenverdrehwinkel mit einer Ebene einschließt, welche durch die Radialrichtung und die Drehachse des Werkzeughalters definiert ist. Die zur Bearbeitung verwendete Hauptschneide wird, anders ausgedrückt, gegenüber der Bearbeitungs- bzw. Rotationsrichtung des Fräswerkzeugs leicht gedreht angeordnet. Diese Drehung hat im Wesentlichen den Zweck, eine senkrechte Krafteinwirkung zu vermeiden und eine optimale Spanbildung bzw. Spanabfuhr zu gewährleisten. Je nach Schneidenverdrehwinkel wird entweder ein sogenannter negativ ziehender Schnitt oder ein positiv ziehender Schnitt erzeugt, wie dies anhand der nachfolgenden Zeichnungen näher erläutert wird.

Wie ebenfalls anhand der nachfolgenden Zeichnungen noch näher erläutert, ist es gemäß einer Ausgestaltung des erfindungsgemäßen Werkzeugs bevorzugt, dass die im Werkzeughalter benachbart angeordneten Wendeschneidplatten jeweils abwechselnd als linke und rechte Wendeschneidplatten realisiert sind. Linke und rechte Wendeschneidplatten unterscheiden sich lediglich dadurch, dass deren Teilkörper um den definierten Verdrehwinkel gleicher Größe, jedoch in entgegengesetzter Richtung um die Bohrungsachse gegenüber einander verdreht sind. Bei der linken Wendeschneidplatte ist beispielsweise der obere Teilkörper gegenüber dem unteren Teilkörper um die Bohrungsachse um 19° im Uhrzeigersinn verdreht, wohingegen dieser bei der rechten Wendeschneidplatte gegenüber dem unteren Teilkörper um den gleichen Winkel von 19° im Gegenuhrzeigersinn verdreht ist.

An dieser Stelle sei angemerkt, dass die Verwendung der erfindungsgemäßen Wendeschneidplatte vorliegend hauptsächlich am Beispiel eines Tangentialnutfräswerkzeugs beschrieben ist. Die erfindungsgemäße Wendeschneidplatte lässt sich jedoch ebenso auch zum Beispiel in Schaftfräsern oder in einem Drehhalter verwenden. Die erfindungsgemäße Wendeschneidplatte ist daher nicht auf die vorliegend beschriebenen Anwendungen beschränkt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine perspektivische Ansicht der erfindungsgemäßen Wendeschneidplatte,
- Fig. 2: eine perspektivische Ansicht eines erfindungsgemäßen Werkzeugs zur spanenden Bearbeitung eines Werkstücks, bei dem die erfindungsgemäßen Wendeschneidplatten Verwendung finden,
- Fig. 3: eine Draufsicht der erfindungsgemäßen Wendeschneidplatte, welche gemäß einer ersten Ausführungsform am Werkzeughalter des erfindungsgemäßen Werkzeugs befestigt ist,
- Fig. 4: eine Draufsicht der erfindungsgemäßen Wendeschneidplatte, welche gemäß einer zweiten Ausführungsform an dem Werkzeughalter des erfindungsgemäßen Werkzeugs befestigt ist,
- Fig. 5: eine vergrößerte Ansicht einer ersten Ausführungsform einer im Werkzeughalter des erfindungsgemäßen Werkzeugs vorgesehenen Schneidplattenaufnahme, in welcher die erfindungsgemäße Wendeschneidplatte am Werkzeughalter befestigbar ist,
- Fig. 6: eine vergrößerte Ansicht einer zweiten Ausführungsform einer im Werkzeughalter des erfindungsgemäßen Werkzeugs vorgesehenen Schneidplattenaufnahme, in welcher die erfindungsgemäße Wendeschneidplatte befestigbar ist,
- Fig. 7: eine Seitenansicht der erfindungsgemäßen Wendeschneidplatte in in den Werkzeughalter des erfindungsgemäßen Werkzeugs eingebauter Position,
- Fig. 8: eine Detailansicht der in Fig. 7 dargestellten Seitenansicht der Wendeschneidplatte, und
- Fig. 9: eine Schnittansicht der in den Werkzeughalter eingebauten Wendeschneidplatte aus Fig. 7.

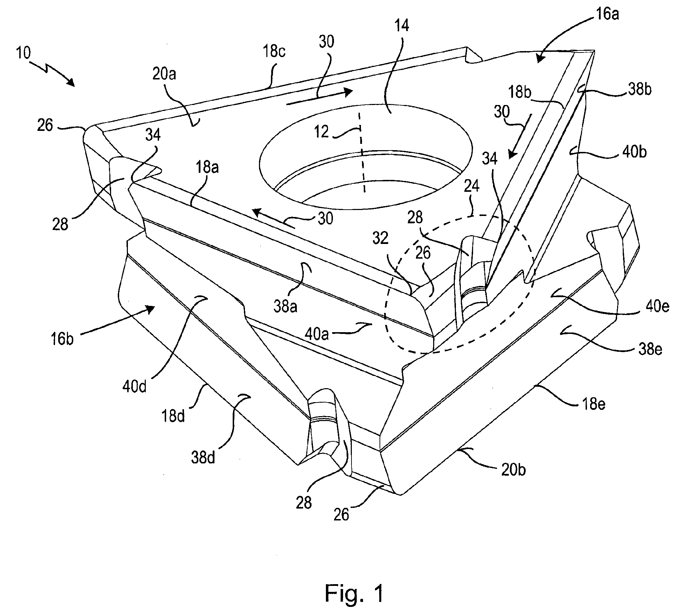

Fig. 1 zeigt eine Ausführungsform der erfindungsgemäßen Wendeschneidplatte, welche gesamthaft mit der Bezugsziffer 10 gekennzeichnet ist. Die darin gezeigte Wendeschneidplatte 10 ist 120° drehsymmetrisch um eine Bohrungsachse 12 einer zentral in der Wendeschneidplatte 10 angebrachten Bohrung 14 angeordnet. Zur Erläuterung sei hierbei erwähnt, dass unter einer 120°-Drehsymmetrie Symmetrieeigenschaften verstanden werden, bei denen sich der Körper der Wendeschneidplatte 10 durch Drehung um die Bohrungsachse 12 um einen Winkel von 120° wieder auf sich selbst abbildet, wie dies aus Betrachtung der Fig. 1 ersichtlich ist.

Die Wendeschneidplatte 10 weist dabei zwei integral miteinander verbundene, identische Teilkörper 16a, 16b auf. Jeder dieser Teilkörper 16a, 16b weist wiederum jeweils drei identische Hauptschneiden 18a, 18b, 18c bzw. 18d, 18e, 18f auf (die Hauptschneide 18f ist in Fig. 1 verdeckt). Die Wendeschneidplatte 10 besitzt somit insgesamt sechs identische Hauptschneiden 18a-f, welche als geradlinige Schneidkanten ausgebildet sind. Die Hauptschneiden 18a-c bzw. 18d-f jedes Teilkörpers 16a bzw. 16b liegen jeweils in einer Ebene, welche senkrecht zur Bohrungsachse 12 der zentralen Bohrung 14 ist, und schließen untereinander jeweils einen Winkel von 60° ein. Die Hauptschneiden 18a-c bzw. 18d-f jedes Teilkörpers 16a, 16b gleichen somit im Wesentlichen einem gleichseitigen Dreieck.

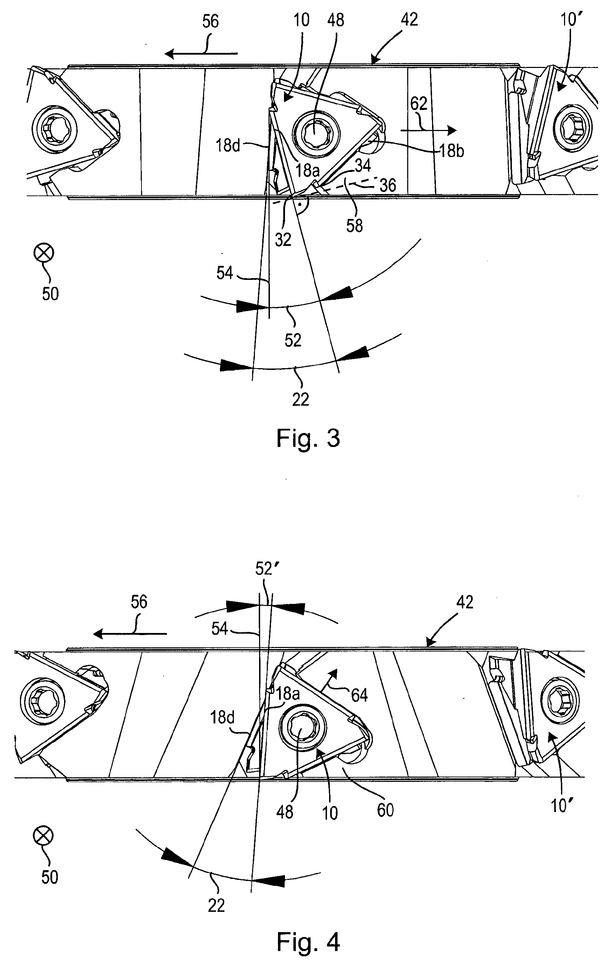

Wie aus Fig. 1 des Weiteren ersichtlich ist, sind die beiden Teilkörper 16a, 16b der Wendeschneidplatte 10 zum einen spiegelverkehrt zueinander ausgestaltet gegenüber einer Spiegelebene, welche senkrecht zur Bohrungsachse 12 ausgerichtet ist und den gleichen Abstand von zwei parallel dazu, endseitig an jedem der Teilkörper 16a, 16b angeordneten Stirnflächen 20a, 20b hat. Zum anderen sind die beiden Teilkörper 16a, 16b zusätzlich zu der Spiegelung noch gegenüber einander um die Bohrungsachse 12 um einen definierten Verdrehwinkel 22 verdreht. Dieser Verdrehwinkel 22 ist explizit in den Fig. 3 und 4 dargestellt. Aus diesen Figuren wird auch ersichtlich, dass durch die bereits beschriebenen Symmetrieeigenschaften der Wendeschneidplatte 10 sich dieser Verdrehwinkel 22 automatisch auch zwischen den Schneidkanten 18a und 18d (ebenso zwischen den Schneidkanten 18b und 18e sowie zwischen den Schneidkanten 18c und 18f) ergibt.

Die zusätzlich zu der spiegelverkehrten Anordnung vorgesehene Verdrehung der beiden Teilkörper 16a, 16b hat mehrere technische Zwecke. Zum einen wird dadurch eine relative Schrägstellung der einzelnen Hauptschneiden 18a-f erreicht. Ohne diese relative Schrägstellung der Hauptschneiden 18a-f würde die Krafteinleitung beim Fräsvorgang senkrecht erfolgen, und auch der Spanabfluss wäre schwierig zu gewährleisten. Zum anderen hat die relative Schrägstellung den Zweck, dass Kollisionen vermieden werden, so dass verhindert wird, dass die Wendeschneidplatte bei der Bearbeitung das zu bearbeitende Werkstück unerwünschterweise mit anderen Teilen (nicht nur mit der Hauptschneide 18a) berührt.

An dieser Stelle ist anzumerken, dass sowohl die oben beschriebene Verdrehung als auch die spiegelverkehrte Anordnung der beiden Teilkörper 16a, 16b nichts an den oben beschriebenen 120°-Drehsymmetrieeigenschaften der Wendeschneidplatte 10 verändert. Diese Symmetrieeigenschaften ermöglichen es, dass die Wendeschneidplatte in sechs unterschiedlichen Stellungen in einen entsprechenden Werkzeughalter einsetzbar ist, wobei in jeder dieser sechs Stellungen gleiche Zerspanungseigenschaften gewährleistet sind und jeweils nur eine, nämlich die in Bearbeitungsrichtung vorderste Hauptschneide 18a-f, die spanende Bearbeitung am Werkstück ausführt. Diese sechs unterschiedlichen Stellungen der Wendeschneidplatte 10 werden zum einen dadurch erreicht, dass die Wendeschneidplatte 10 um die Bohrungsachse 12 um 120° gedreht wird, wodurch sich drei dieser Stellungen realisieren lassen. Zum anderen lässt sich die Wendeschneidplatte auch um 180° um eine senkrecht zur Bohrungsachse 12 ausgerichtete Achse wenden, so dass sich weitere drei Positionen ergeben, welche die Verwendung der Hauptschneiden 18d-18f des zweiten Teilkörpers 16b ermöglichen.

In der praktischen Verwendung der Wendeschneidplatte 10 können somit alle sechs Hauptschneiden 18a-18f nacheinander zur Bearbeitung verwendet werden, bevor die Wendeschneidplatte 10 unbrauchbar ist und entsorgt werden muss. Sobald eine der Hauptschneiden 18a-f verschlissen ist, muss dazu lediglich die Wendeschneidplatte 10 vom jeweiligen Werkzeughalter gelöst werden, in obiger Weise gedreht oder gewendet werden und in der neuen Position wieder am Werkzeughalter befestigt werden, so dass eine der weiteren (noch übrigen, unverschlissenen) Hauptschneiden 18a-f für die Bearbeitung verwendet werden kann.

Im Folgenden sollen die konstruktiven Details der in Fig. 1 dargestellten Wendeschneidplatte 10 näher erläutert werden: Wie aus Fig. 1 ersichtlich ist, sind die einzelnen Hauptschneiden 18a-f als geradlinige Schneidkanten ausgebildet, wobei die einzelnen Hauptschneiden 18a-f jedes Teilkörpers 16a, 16b nicht direkt ineinander übergehen. Wie zum Beispiel im Bereich der Schneidenecke 24 ersichtlich, sind die benachbarten Hauptschneiden 18a und 18b durch einen Eckenradius 26 und einen mit einer Fase 28 versehenen Materialausschnitt voneinander getrennt. Mit anderen Worten ist jede der sechs Hauptschneiden 18a-f an einem Ende durch einen Eckenradius 26 abgerundet und weist an deren in der jeweiligen Kantenrichtung 30 gegenüberliegenden anderen Ende einen mit einer Fase 28 versehenen Materialausschnitt auf.

Diese in jeder Schneidenecke der Wendeschneidplatte 10 vorgesehene Kombination aus Eckenradius 26 und Fase 28 dient im Wesentlichen dazu, Kollisionen des Werkstücks mit den übrigen, nicht verwendeten Schneidkanten 18a-f bei der Bearbeitung zu vermeiden. Ohne diese Eckenradien 26 und Fasen 28 würden beispielsweise nämlich bei der Bearbeitung des Werkstücks mit der Hauptschneide 18a auch die beiden anderen oder zumindest eine der beiden Hauptschneiden 18b und 18c des gleichen Teilkörpers 16a in den Schneidkantenecken an den Übergängen zwischen den Hauptschneiden 18a, 18b bzw. 18a, 18c mit dem Werkstück kollidieren. Abgesehen davon, dass dies eine genaue Fräsbearbeitung gar nicht ermöglichen würde, würden dadurch auch die Hauptschneiden 18b und 18c an ihren vorderen Ecken verschleißen, obwohl nur die Hauptschneide 18a in diesem Beispielfall zur Bearbeitung verwendet werden soll.

An dieser Stelle ist wiederum anzumerken, dass die Anbringung der Eckenradien 26 und Fasen 28 an allen sechs Ecken der Wendeschneidplatte 10 identisch realisiert ist, so dass wiederum die oben beschriebenen 120°-Drehsymmetrieeigenschaften nach wie vor gegeben sind. Um obengenannte unerwünschte Kollisionen des Werkstücks mit den übrigen, nicht verwendeten Schneidkanten 18b, 18c (bei Verwendung der Schneidkante 18a) zu vermeiden, sollte gewährleistet sein, dass das erste Ende 32 der Hauptschneide 18a gegenüber dem zweiten Ende 34 der in Richtung um die Bohrungsachse 12 gesehen benachbarten Hauptschneide 18b hervorsteht. Genauer gesagt sollte das erste Ende 32 der Hauptschneide 18a gegenüber dem zweiten Ende 34 der Hauptschneide 18b so weit hervorstehen, dass das zweite Ende 34 der Hauptschneide 18b von einer durch das erste Ende 32 der Hauptschneide 18a und senkrecht zu deren Kantenrichtung 30 verlaufenden, gedachten Hilfsebene beabstandet ist. In Fig. 3 ist diese Hilfsebene durch eine gestrichelte Linie 36 angedeutet. Hieraus ist ersichtlich, dass das zweite Ende 34 der Schneidkante 18b von dieser Hilfslinie (Hilfsebene) beabstandet bzw. von dieser Hilfslinie 36 nach innen zurückversetzt ist. Bei der in Fig. 3 dargestellten Situation, in welcher die Hauptschneide 18a zur spanenden Bearbeitung verwendet wird, ist die Kollision des zweiten Endes 34 der Schneidkante 18b daher ausgeschlossen.

Es versteht sich, dass die zuletzt beschriebenen geometrischen Verhältnisse an den beiden Enden der benachbarten Schneidkanten 18a, 18b auch an den Übergängen aller anderen benachbarten Hauptschneiden 18a-f realisiert sind. Vorliegend soll dabei das erste Ende 32 an jeder Hauptschneide 18a-f jeweils das Ende der Schneidkante bezeichnen, welches mit einem Eckenradius 26 versehen ist, bzw. das zweite Ende 34 das jeweilige Ende der Schneidkanten 18a-f bezeichnen, an dem die Fase 28 angebracht ist.

Aus Fig. 1 ist des Weiteren ersichtlich, dass die drei Hauptschneiden 18a-c bzw. 18d-f jedes Teilkörpers 16a bzw. 16b der Wendeschneidplatte 10 als Schneidkante am Übergang zwischen der jeweiligen Stirnfläche 20a bzw. 20b des Teilkörpers 16a bzw. 16b und jeweils einer quer dazu angeordneten Spanfläche 38a-f (Spanflächen 38c, 38f in Fig. 1 verdeckt) ausgebildet sind. Um ein Ablaufen des bei der Bearbeitung entstehenden Spans zu gewährleisten, sind die Spanflächen 38a-f jeweils unter einem definierten Spanwinkel gegenüber der Bohrungsachse 12 gekippt ausgestaltet.

Angrenzend an die beschriebenen Spanflächen 38a-f erstrecken sich zwischen der bereits beschriebenen Spiegelebene, welche die beiden Teilkörper 16a und 16b imaginär voneinander trennt, und den Spanflächen 38a-f jedes Teilkörpers 16a, 16b jeweils eine parallel zur Bohrungsachse 12 verlaufende Anlagefläche 40a-f (Anlageflächen 40c und 40f in Fig. 1 verdeckt). Diese Anlageflächen 40a-f dienen als Anlageflächen, mit denen die Wendeschneidplatte 10 in einer entsprechenden Schneidplattenaufnahme 46' am Werkzeughalter anliegt. Die während der Bearbeitung auftretenden Schnittkräfte werden somit über diese Anlageflächen 40a-f in den Werkzeughalter des Werkzeugs eingeleitet. Durch deren senkrechte Ausrichtung zur Bohrungsachse 12 lässt sich eine optimale Krafteinleitung realisieren.

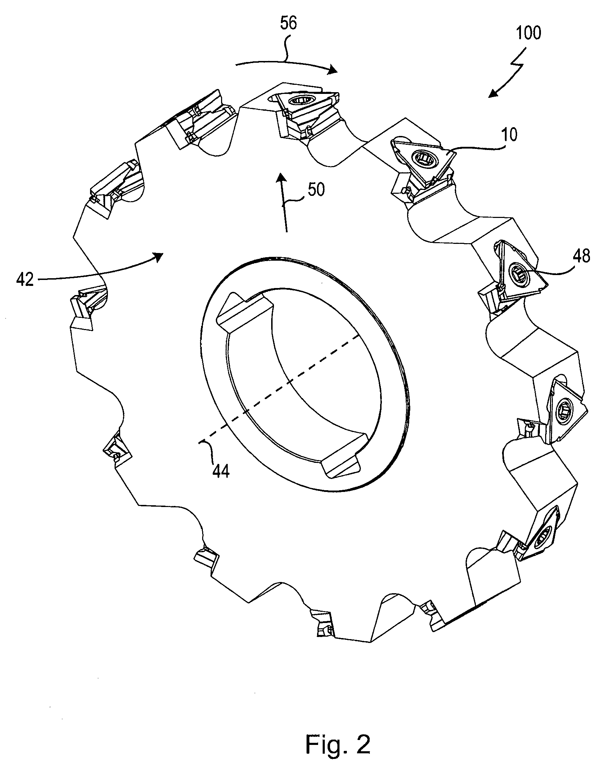

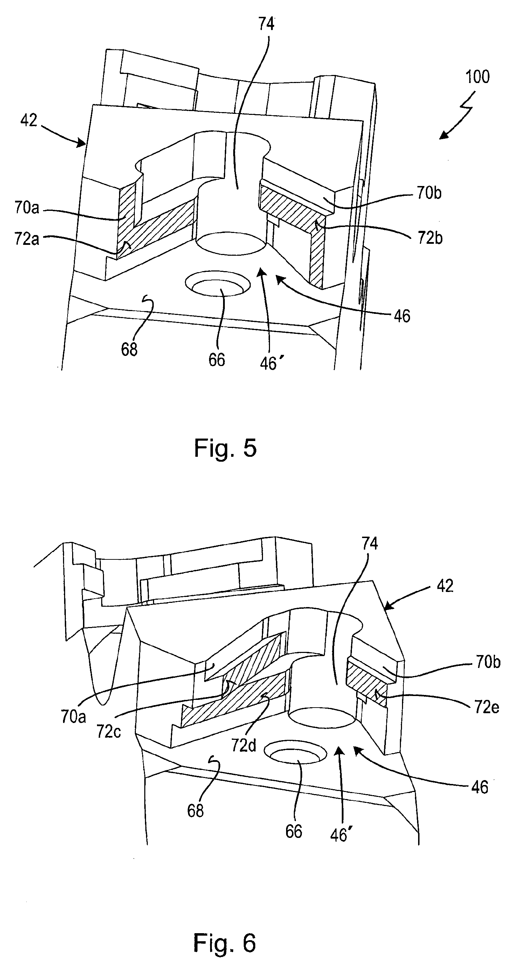

Fig. 2 zeigt eine perspektivische Ansicht eines erfindungsgemäßen Werkzeugs, bei dem die oben beschriebene erfindungsgemäße Wendeschneidplatte 10 zum Einsatz kommt. Das erfindungsgemäße Tangentialnutfräswerkzeug ist darin gesamthaft mit dem Bezugszeichen 100 gekennzeichnet. Dieses Tangentialnutfräswerkzeug 100 weist einen Werkzeughalter 42 auf, welcher rotationssymmetrisch um eine Drehachse 44 ist. Am Werkzeughalter 42 ist umfangsseitig mindestens eine, vorzugsweise eine Vielzahl von Einsatztaschen 46 (im Detail in Fig. 5 und 6 dargestellt) vorgesehen, welche als Schneidplattenaufnahme(n) 46' für die Aufnahme der Wendeschneidplatte(n) 10 fungieren. Die Wendeschneidplatten 10 sind vorzugsweise mit einer Schraube 48 am Werkzeughalter 42 lösbar befestigt. Es versteht sich jedoch, dass auch andere Befestigungsmittel verwendet werden können, um die Wendeschneidplatte 10 am Werkzeughalter 42 zu befestigen. Durch Lösen des jeweiligen Befestigungsmittels (der Schraube 48) lässt sich die Wendeschneidplatte 10 vom Werkzeughalter 42 lösen, um, bei Verschleiß der für die Bearbeitung verwendeten Hauptschneide, die Wendeschneidplatte 10 zu drehen bzw. zu wenden und dadurch neu im Werkzeughalter 42 positionieren zu können.

Aus den in den Fig. 3 und 4 gezeigten Detailansichten, welche das in Fig. 2 gezeigte Tangentialnutfräswerkzeug in einer Draufsicht darstellen, ist die erfindungsgemäße Anordnung der Wendeschneidplatten 10 im Werkzeughalter 42 ersichtlich. Die Fig. 3 und 4 zeigen dabei zwei alternative Ausführungsformen dieser Anordnung. Im Wesentlichen besteht der Unterschied zwischen diesen beiden Ausführungsformen darin, dass die zur Bearbeitung verwendete Hauptschneide (im dargestellten Fall die Hauptschneide 18a) gegenüber dem Werkzeughalter 42 unterschiedlich ausgerichtet ist.

In beiden Fällen ist die zur Bearbeitung verwendete Hauptschneide 18a um die Radialrichtung 50 derart verdreht angeordnet, dass die Hauptschneide 18a einen Schneidenverdrehwinkel 52, 52' mit einer Ebene (angedeutet mit Hilfslinie 54) einschließt, welche durch die Radialrichtung 50 und die Drehachse 44 des Werkzeughalters 42 aufgespannt wird. Der Unterschied besteht allerdings darin, dass die Hauptschneide 18a bei der in Fig. 3 gezeigten Ausführungsform ausgehend von der soeben erwähnten Ebene 54 um einen im Uhrzeigersinn gesehen negativen Winkel 52 verdreht angeordnet ist, wohingegen die Hauptschneide 18a bei der in Fig. 4 gezeigten Ausführungsform von dieser Ebene 54 aus gesehen um einen im Uhrzeigersinn positiven Winkel 52' (also im Gegenuhrzeigersinn negativen Winkel 52') verdreht angeordnet ist. Anders ausgedrückt ist die Hauptschneide 18a in Fig. 3 um die Radialrichtung 50 um den Verdrehwinkel 52 entgegen der Bearbeitungsrichtung/Umfangsrichtung 56 verdreht angeordnet und in Fig. 4 um die Radialrichtung 50 um den Winkel 52' in Richtung der Bearbeitungs-/Umfangsrichtung 56 des Werkzeugs 100 verdreht angeordnet.

Bei der in Fig. 3 dargestellten ersten Ausführungsform spricht man auch von einem sogenannten negativ ziehenden Schnitt, bei dem die Spanabfuhr über die Spanfläche 38a in Richtung zum abnehmenden Material hin (in Richtung zu der bei der Bearbeitung entstehenden Nutwand hin) erfolgt. Dagegen erfolgt die Spanabfuhr bei dem in Fig. 4 dargestellten sogenannten positiv ziehenden Schnitt vom Material weg (von der bei der Bearbeitung entstehenden Nutwand weg). Wie durch Vergleich der beiden Figuren des Weiteren ersichtlich, ist der Verdrehwinkel 52 beim negativ ziehenden Schnitt (Fig. 3) größer gewählt als der Verdrehwinkel 52' bei der Variante mit positiv ziehendem Schnitt (Fig. 4). Versuche der Erfinder haben gezeigt, dass insbesondere Verdrehwinkel 52 im Bereich von 14,5° im Fall des negativ ziehenden Schnitts (Fig. 3) und Verdrehwinkel 52' im Bereich von 4° im Fall des positiv ziehenden Schnitts (Fig. 4) sich in Bezug auf die bei der Bearbeitung entstehenden Schnittverhältnisse als vorteilhaft erweisen. Es versteht sich jedoch, dass durchaus auch andere Winkel auftreten können, ohne vom Kern der Erfindung abzuweichen.

Die Anordnung der Wendeschneidplatte 10 im positiv ziehenden Schnitt (Fig. 4) erzeugt aufgrund besserer Spanbildungseigenschaften im Allgemeinen bessere Schnittverhältnisse als dies beim negativ ziehenden Schnitt (Fig. 3) der Fall ist. Dagegen sind die Stabilitätsverhältnisse des Plattensitzes der Wendeschneidplatte 10 im Werkzeughalter 42 beim negativ ziehenden Schnitt (Fig. 3) deutlich besser als im Falle des positiv ziehenden Schnitts (Fig. 4), da die Wendeschneidplatte 10 mehr oder weniger zentral im Werkzeughalter 42 angeordnet ist.

Wie sich aus dem Vergleich der Fig. 3 und 4 ergibt, ist an der Position 58 (siehe Fig. 3) mehr Material vorhanden als an der entsprechenden Position 60 (siehe Fig. 4). Mit anderen Worten ist die Seitenwand des Werkzeughalters 42 an der Position 58 in Fig. 3 dicker und damit stabiler ausgestaltet als die entsprechende Seitenwand des Werkzeughalters 42 an der Position 60 in Fig. 4. Die Stabilität des Plattensitzes ist damit in Bezug auf diese Position 58 bzw. 60 bei dem in Fig. 3 dargestellten negativ ziehenden Schnitt wesentlich besser als dies beim in Fig. 4 dargestellten positiv ziehenden Schnitt der Fall ist.

Die unterschiedlichen Stabilitätsverhältnisse werden durch eine unterschiedliche Krafteinleitung von der Wendeschneidplatte 10 auf den Werkzeughalter 42 kompensiert. Dies wird dadurch bewerkstelligt, dass die Wendeschneidplatte 10 bei der in Fig. 3 dargestellten Ausführungsform innerhalb des Plattensitzes des Werkzeughalters 42 einen Anzug erfährt, welcher die Wendeschneidplatte 10 innerhalb des Plattensitzes in Richtung 62 zieht, wohingegen der Anzug der Wendeschneidplatte 10 bei der in Fig. 4 dargestellten Ausführungsform die Wendeschneidplatte 10 in Richtung 64 gegen den Werkzeughalter 42 anzieht. Dies lässt sich dadurch erreichen, dass die Bohrungsachse 12 der Wendeschneidplatte 10 beim bloßen Einsetzen (also im unangeschraubten Zustand) in die Einsatztasche 46 des Werkzeughalters 42 parallel leicht versetzt ist zur Mittelachse der korrespondierenden Bohrung 66 in der Einsatztasche 46. Durch diesen leichten Versatz erfährt die Wendeschneidplatte 10 beim Anziehen der Schraube 48 eine Anzugskraft, welche, je nach Ausführungsform, in Richtung 62 (negativ ziehender Schnitt in Fig. 3) bzw. in Richtung 64 (positiv ziehender Schnitt in Fig. 4) wirkt. Dadurch wird in beiden Ausführungsformen jeweils ein optimal stabiler Plattensitz der Wendeschneidplatte 10 innerhalb der Einsatztasche 46 des Werkzeughalters 42 gewährleistet.

Des Weiteren ist aus den Fig. 3 und 4 ersichtlich, dass die im Werkzeughalter 42 benachbart angebrachten Wendeschneidplatten 10, 10' sich voneinander unterscheiden. Vorzugsweise werden bei dem in Fig. 2 dargestellten Werkzeug nämlich jeweils abwechselnd sogenannte linke und rechte Wendeschneidplatten 10 bzw. 10' am Werkzeughalter 42 angeordnet. Die Wendeschneidplatten 10 und 10' sind identisch aufgebaut, unterscheiden sich jedoch dadurch, dass deren Teilkörper 16a, 16b um den definierten Verdrehwinkel 22 in entgegengesetzter Richtung um die Bohrungsachse 12 gegenüber einander verdreht sind. Entsprechend sind diese unterschiedlichen Ausführungsformen der Wendeschneidplatten 10, 10' auch jeweils entsprechend entweder am linken oder rechten Seitenrand des Werkzeughalters 42 angeordnet, so dass die bei der Bearbeitung entstehende Nut durch das Zusammenspiel der unterschiedlichen Wendeschneidplatten 10, 10' vollflächig ausgefräst wird. Versuche der Erfinder haben ergeben, dass insbesondere ein Verdrehwinkel 22 im Bereich von 19° oder von exakt 19° beider Wendeschneidplatten 10, 10' (sowohl linke als auch rechte Wendeschneidplatte 10, 10') zu einem optimalen Arbeitsergebnis führen.

Die Ausführung der Schneidplattenaufnahme 46', welche als Einsatztasche 46 im Werkzeughalter 42 ausgebildet ist, ist in den Fig. 5 und 6 für beide Ausführungsformen nochmals ohne die darin einsetzbare Wendeschneidplatte 10 dargestellt. Dabei entspricht die in Fig. 5 gezeigte Ausführungsform der Einsatztasche 46 der in Fig. 3 vorgestellten ersten Ausführungsform. Die in Fig. 6 dargestellte Ausführung der Einsatztasche 46 entspricht dagegen der in Fig. 4 bereits vorgestellten zweiten Ausführungsform.

Beide Einsatztaschen 46 weisen eine Grundfläche 68 auf, auf welcher die Wendeschneidplatte 10 in montiertem Zustand mit einer ihrer Stirnflächen 20a, 20b aufliegt. Der Normalenvektor der Grundfläche 68 (nicht dargestellt) der Einsatztasche 46 ist im Wesentlichen radial vom Werkzeughalter 42 nach außen gerichtet. Er zeigt also von der Drehachse 44 des Werkzeughalters 42 weg. Augrund der weiter unten beschriebenen, bevorzugten Neigung bzw. Verkippung der Grundfläche 68, ist deren Normalenvektor jedoch nicht exakt in Radialrichtung 50 des Werkzeughalters 42 ausgerichtet, sondern schließt mit dieser einen oder mehrere Neigungswinkel ein. Jede Einsatztasche 46 weist des Weiteren zwei senkrecht zu dieser Grundfläche 68 verlaufende Seitenwände 70a, 70b auf, eine erste Seitenwand 70a und eine zweite Seitenwand 70b. Jede dieser Seitenwände 70a, 70b weist wiederum mindestens eine Anlagefläche 72a-e auf, an denen die Wendeschneidplatte 10 in montiertem Zustand mit mindestens einer ihrer ebenfalls senkrecht verlaufenden Anlagefläche 40a-f anliegt. Diese Anlageflächen 72a-e sind jedoch, je nach Ausführungsform, unterschiedlich ausgestaltet.

Bei der in Fig. 3 und 5 gezeigten ersten Ausführungsform, in welcher die Wendeschneidplatte 10 im negativ ziehenden Schnitt im Werkzeughalter 42 angeordnet ist, liegt die Wendeschneidplatte 10 an der ersten Seitenwand 70a der Einsatztasche 46 mit einer Anlagefläche 40 des einen Teilkörpers 16b an der korrespondierenden Anlagefläche 72a an und mit einer weiteren Anlagefläche 40 des anderen Teilkörpers 16a der Wendeschneidplatte 10 an der zweiten Seitenwand 70b der Einsatztasche 46 an der Anlagefläche 72b an. Anders ausgedrückt, liegt die Wendeschneidplatte 10 einerseits mit einer Anlagefläche 40 des unteren Teilkörpers 16b der Wendeschneidplatte 10 an der korrespondierenden Anlagefläche 72a am Werkzeughalter 42 an, und andererseits mit einer Anlagefläche 40 des oberen Teilkörpers 16a der Wendeschneidplatte 10 an der korrespondierenden Anlagefläche 72b am Werkzeughalter 42 an. Damit ergibt sich bei dieser Ausführungsform auf einer Seite eine untere und auf der anderen Seite eine obere Anlage.

Beispielsweise liegt die Wendeschneidplatte 10 auf der ersten Seite mit der Anlagefläche 40e des Teilkörpers 16b an der Anlagefläche 72a an und mit der Anlagefläche 40a des Teilkörpers 16a an der Anlagefläche 72b an. Eine Ausrichtung der Wendeschneidplatte 10 innerhalb der Einsatztasche 46 gemäß dem genannten Beispiel würde somit also zur Verwendung der Hauptschneide 18c führen, welche dann als vorderste Schneidkante zu liegen kommt.

Die Seitenwände 70a und 70b mit ihren Anlageflächen 72c-e der Einsatztasche 46 gemäß der zweiten Ausführungsform (siehe Fig. 6) sind dagegen etwas anders ausgestaltet. Hier sind an der ersten Seitenwand 70a zwei Anlageflächen 72c, 72d vorgesehen, so dass die Wendeschneidplatte 10 in montiertem Zustand auf dieser Seite nicht nur mit einer, sondern mit zwei Anlageflächen 40 anliegt, wohingegen die zweite Seitenwand 70b gemäß dieser Ausführungsform nur eine Anlagefläche 72e aufweist, so dass die Wendeschneidplatte 10 auf dieser Seite auch nur mit einer Anlagefläche 40 anliegt.

Auch dies soll zum besseren Verständnis anhand eines kurzen Beispiels dargestellt werden. Die Wendeschneidplatte 10 könnte beispielsweise mit der Anlagefläche 40b des ersten Teilkörpers 16a an der Anlagefläche 72c anliegen, mit der Anlagefläche 40e des zweiten Teilkörpers 16b an der Anlagefläche 72d anliegen und mit der Anlagefläche 40a des ersten Teilkörpers 16a an der Anlagefläche 72e anliegen. Auch in diesem Beispiel würde wiederum die Hauptschneide 18c zur Bearbeitung verwendet werden.

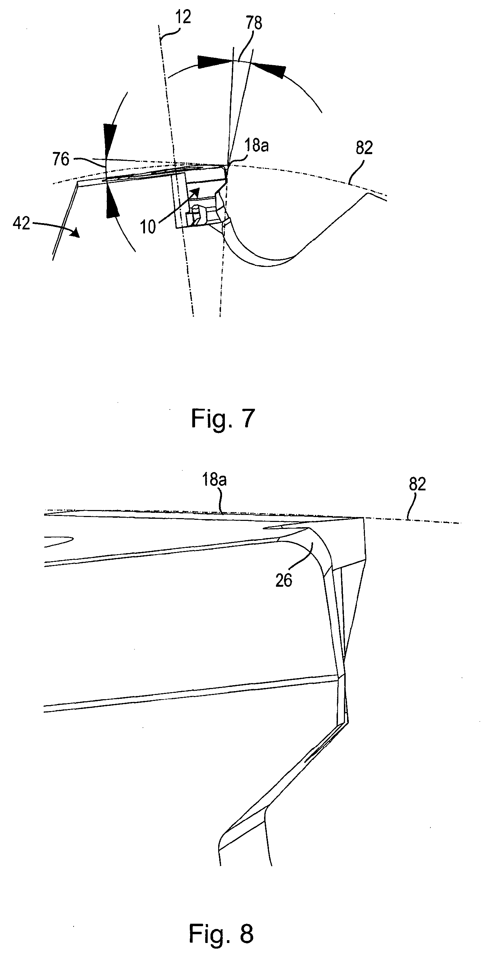

Die Grundfläche 68 der Einsatztasche 46 ist gemäß beider Ausführungsformen zusätzlich mehrfach geneigt, um eine entsprechende Neigung der darin eingesetzten Wendeschneidplatte 10 zu erreichen. Dies wird insbesondere aus den Fig. 7 bis 9 ersichtlich. Die Grundfläche 68 der Einsatztasche 46 ist zum einen um eine in der Grundfläche 68 liegende erste Mittelachse (nicht dargestellt), welche parallel zur Drehachse 44 des Werkzeugkörpers 42 ausgerichtet ist, um einen definierten ersten Neigungswinkel geneigt. Dieser erste Neigungswinkel bewirkt, dass die Wendeschneidplatte 10 in montiertem Zustand innerhalb der Einsatztasche 46 zum Grund 74 der Einsatztasche 46 nach "hinten" gekippt ist. Wie in Fig. 7 dargestellt, ergibt sich dadurch an der zur Bearbeitung verwendeten Hauptschneide 18 (zum Beispiel Hauptschneide 18a) ein entsprechender Freiwinkel 76 sowie ein Spanwinkel 78. Versuche der Erfinder haben gezeigt, dass insbesondere ein Freiwinkel 76 im Bereich von 10° oder exakt 10° und ein Spanwinkel im Bereich von 7° oder exakt 7° sich als vorteilhaft in Bezug auf die Bearbeitungseigenschaften erweisen. Es versteht sich jedoch, dass sich, je nach Neigung der Grundfläche 68 der Einsatztasche 46, auch andere Frei- bzw. Spanwinkel realisieren lassen, ohne vom Kern der Erfindung abzuweichen.

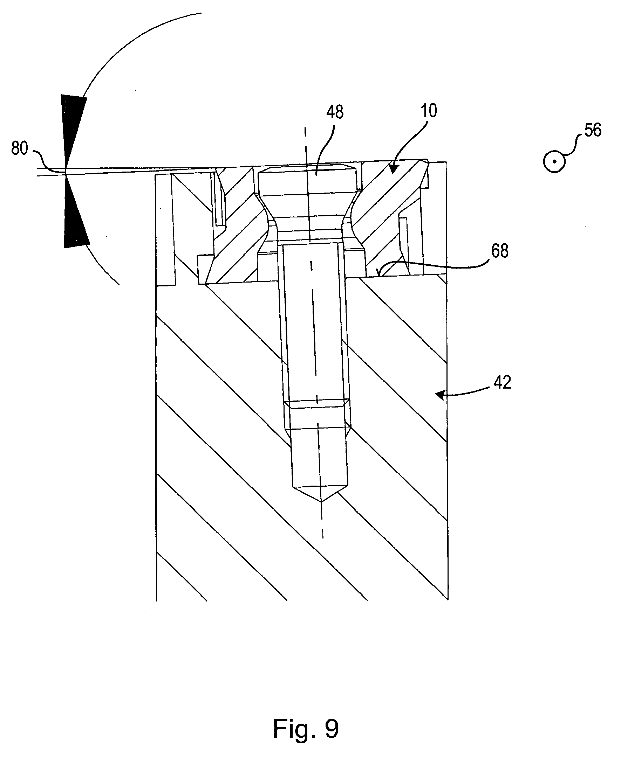

Wie in der Schnittansicht in Fig. 9 dargestellt, ist die Grundfläche 68 der Einsatztasche 46 um eine in der Grundfläche 68 liegende zweite Mittelachse (nicht dargestellt), welche parallel zur Umfangsrichtung 56 des Werkzeughalters 42 ausgerichtet ist, um einen definierten zweiten Neigungswinkel 80 geneigt. Dies bewirkt entsprechend (wie in Fig. 9 dargestellt) auch eine Neigung der in der Einsatztasche 46 montierten Wendeschneidplatte 10 um den genannten zweiten Neigungswinkel 80.

Durch diesen Neigungswinkel, welcher vorzugsweise im Bereich von 0,5° bis 3° liegt, soll ein möglichst ebener Nutgrund beim Fräsen erreicht werden. Im Übrigen gewährleistet dieser Neigungswinkel 80, dass, wie in Fig. 8 dargestellt, der Eckenradius 26 am ersten Ende 32 der Hauptschneide 18 freiläuft und somit nicht mit dem zu bearbeitenden Werkstück kollidiert. Zu Illustrationszwecken ist in Fig. 8 die Hüllkurve 82 des Schneidkreises des Werkzeugs 100 zusätzlich angedeutet.

Zusammenfassend lässt sich also feststellen, dass es den Erfindern gelungen ist, eine sechsschneidige Wendeschneidplatte zu entwickeln, welche sehr variabel einsetzbar ist. Die spezielle drehsymmetrische Anordnung der Schneiden verhindert unerwünschte Kollisionen. Der Einsatz dieser Wendeschneidplatten in dem vorgestellten Tangentialnutfräser ermöglicht daher eine optimale Bearbeitung des Werkstücks. Insbesondere bei den genannten Tangentialnutfräsanwendungen erweist sich die erfindungsgemäße Wendeschneidplatte als vorteilhaft gegenüber den bisher aus dem Stand der Technik bekannten vierschneidigen Wendeschneidplatten.

## Patentansprüche

1. Wendeschneidplatte für ein Werkzeug zur spanenden Bearbeitung eines Werkstücks, wobei die Wendeschneidplatte (10) um eine Bohrungsachse (12), die senkrecht und zentral durch zwei sich gegenüberliegende Stirnflächen (20a, 20b) der Wendeschneidplatte (10) verläuft, 120° drehsymmetrisch ist, und zwei miteinander verbundene, identische Teilkörper (16a, 16b) aufweist, welche jeweils drei im Winkel von 60° zueinander und in einer Ebene angeordnete identische Hauptschneiden (18a-c, 18d-f) umfassen, die parallel zu den beiden gegenüberliegenden Stirnflächen (20a, 20b) und windschief zur Bohrungsachse (12) verlaufen, wobei die beiden Teilkörper (16a, 16b) zum einen spiegelverkehrt zueinander ausgestaltet sind gegenüber einer Spiegelebene, welche senkrecht zur Bohrungsachse (12) verläuft und den gleichen Abstand zu beiden Stirnflächen (20a, 20b) hat, und zum anderen zusätzlich noch um einen definierten Verdrehwinkel (22) um die Bohrungsachse (12) gegenüber einander verdreht sind, wobei die drei Hauptschneiden (18a-c, 18d-f) jedes Teilkörpers (16a, 16b) der Wendeschneidplatte (10) als Schneidkanten am Übergang zwischen der Stirnfläche (20a, 20b) des jeweiligen Teilkörpers (16a, 16b) und jeweils einer quer zur jeweiligen Stirnfläche (20a, 20b) angeordneten Spanfläche (38a-f) ausgebildet sind, wobei die jeweilige Spanfläche (38a-f) unter einem definierten Spanwinkel gegenüber der Bohrungsachse (12) gekippt ist, **dadurch gekennzeichnet, dass** zwischen der Spiegelebene und den Spanflächen (38a-f) jedes Teilkörpers (16a, 16b) jeweils eine parallel zur Bohrungsachse (12) verlaufende Anlagefläche (40a-f) ausgebildet ist, und wobei jede Schneidkante (18a-f) endseitig an ihrem ersten Ende (32) durch einen Eckenradius (26) abgerundet ist und an ihrem in Kantenrichtung (30) gegenüberliegenden zweiten Ende (34) einen mit einer Fase (28) versehenen Materialeinschnitt aufweist.

2. Wendeschneidplatte nach Anspruch 1, wobei der Verdrehwinkel (22) kleiner als 30° ist.

3. Wendeschneidplatte nach Anspruch 1, wobei die drei Hauptschneiden (18a-c, 18d-f) jedes Teilkörpers (16a, 16b) der Wendeschneidplatte (10) zueinander so angeordnet sind, dass der Eckenradius (26) einer Hauptschneide (18a-f) an den mit der Fase (28) versehenen Materialausschnitt der im 60°-Winkel dazu angeordneten, in Richtung um die Bohrungsachse (12) gesehen benachbarten Hauptschneide (18a-f) angrenzt.

4. Wendeschneidplatte nach Anspruch 1, wobei das erste Ende (32) einer Hauptschneide (18a-f) gegenüber dem zweiten Ende (34) der in Richtung um die Bohrungsachse (12) gesehen benachbarten Hauptschneide (18a-f) so hervorsteht, dass das zweite Ende (34) der benachbarten Hauptschneide (18a-f) von einer durch das erste Ende (32) der zuerst genannten Hauptschneide (18a-f) und senkrecht zu deren Kantenrichtung (30) verlaufenden, gedachten Hilfsebene (36) beabstandet ist.

5. Werkzeug zur spanenden Bearbeitung eines Werkstücks, insbesondere zum Tangentialnutfräsen, mit einem Werkzeughalter (42), welcher mindestens eine Schneidplattenaufnahme (46') aufweist, in der eine Wendeschneidplatte (10) nach einem der Ansprüche 1 bis 4 lösbar befestigt ist.

6. Werkzeug nach Anspruch 5, wobei der Werkzeughalter (42) um eine Drehachse (44) des Werkzeughalters (42) rotationssymmetrisch ist und die mindestens eine Schneiplattenaufnahme (46') umfangsseitig am Werkzeughalter (42) angeordnet ist und als Einsatztasche (46) für die Wendeschneidplatte (10) ausgebildet ist, wobei die Einsatztasche (46) eine Grundfläche (68) und senkrecht dazu eine erste und eine zweite Seitenwand (70a, 70b) aufweist, wobei die Wendeschneidplatte (10) mit einer ihrer Stirnflächen (16a, 16b) auf der Grundfläche (48) aufliegt und mit mindestens einer Anlagefläche (40a-f) an jeder Seitenwand (70a, 70b) der Einsatztasche (46) anliegt und durch ein Befestigungsmittel (48), insbesondere eine Schraube, in der Einsatztasche (46) lösbar befestigt ist.

7. Werkzeug nach Anspruch 6, wobei die Wendeschneidplatte (10) mit mindestens einer Anlagefläche (40a-c) des einen Teilkörpers (16a) der Wendschneidplatte (10) an der ersten Seitenwand (70a) der Einsatztasche (46) anliegt und mit mindestens einer Anlagefläche (40d-f) des anderen Teilkörpers (16b) der Wendeschneidplatte (10) an der zweiten Seitenwand (70b) der Einsatztasche (46) anliegt.

8. Werkzeug nach Anspruch 6, wobei die Grundfläche (68) der Einsatztasche (46) um eine in der Grundfläche (68) liegende erste Mittelachse, welche parallel zur Drehachse (44) des Werkzeughalters (42) ausgerichtet ist, um einen definierten ersten Neigungswinkel geneigt ist.

9. Werkzeug nach Anspruch 6, wobei die Grundfläche (68) der Einsatztasche (46) um eine in der Grundfläche (68) liegende zweite Mittelachse, welche parallel zur Umfangsrichtung (56) des Werkzeughalters (42) ausgerichtet ist, um einen definierten zweiten Neigungswinkel (80) geneigt ist.

10. Werkzeug nach Anspruch 6, wobei die mindestens eine Wendeschneidplatte (10) nach einem der Ansprüche 1 bis 4 in der Einsatztasche (46) derart um die Radialrichtung (50) des Werkzeughalters (42) um einen definierten Schneidenverdrehwinkel (52, 52') verdreht angeordnet ist, dass die zur Bearbeitung verwendete Hauptschneide (18a-f) diesen Schneidenverdrehwinkel (52, 52') mit einer Ebene (54) einschließt, welche durch die Radialrichtung (50) und die Drehachse (44) des Werkzeughalters (42) definiert ist.

11. Werkzeug nach Anspruch 6, wobei der Werkzeughalter (42) eine Vielzahl von Einsatztaschen (46) aufweist, in welchen jeweils eine Wendeschneidplatte (10) nach einem der Ansprüche 1 bis 4 lösbar befestigt ist, wobei in Umfangsrichtung (56) in benachbarten Einsatztaschen (46) angeordnete Wendeschneidplatten (10) sich dadurch unterscheiden, dass deren Teilkörper (16a, 16b) um den definierten Verdrehwinkel (22) gleicher Größe, jedoch in entgegensetzte Richtung um die Bohrungsachse (12) gegenüber einander verdreht sind.

## Claims

1. Indexable cutting insert for a tool for machining a workpiece, wherein the indexable cutting insert (10) is rotationally symmetrical through 120° about a bore axis (12) which extends perpendicularly and centrally through two opposite end faces (20a, 20b) of the indexable cutting insert (10), and has two connected-together, identical part-bodies (16a, 16b) which each comprise three identical main lips (18a-c, 18d-f) that are arranged at an angle of 60° to one another and in a plane, said main lips (18a-c, 18d-f) extending parallel to the two opposite end faces (20a, 20b) and in a skew manner with respect to the bore axis (12), wherein the two part-bodies (16a, 16b) are configured in a mirror-inverted manner with respect to a mirror plane which extends perpendicularly to the bore axis (12) and is at the same distance from the two end faces (20a, 20b), and are additionally twisted through a defined twist angle (22) about the bore axis (12) with respect to one another, wherein the three main lips (18a-c, 18d-f) of each part-body (16a, 16b) of the indexable cutting insert (10) are configured as cutting edges at the transition between the end face (20a, 20b) of the respective part-body (16a, 16b) and in each case one rake face (38a-f) arranged transversely to the respective end face (20a, 20b), wherein the respective rake face (38a-f) is tilted at a defined rake angle with respect to the bore axis (12), **characterized in that** an abutment surface (40a-f) that extends parallel to the bore axis (12) is formed in each case between the mirror plane and the rake faces (38a-f) of each part-body (16a, 16b), and wherein each cutting edge (18a-f) is terminally rounded at its first end (32) by a corner radius (26) and has a material incision provided with a bevel (28) at its second end (34) located opposite in the edge direction (30).

2. Indexable cutting insert according to Claim 1, wherein the twist angle (22) is less than 30°.

3. Indexable cutting insert according to Claim 1, wherein the three main lips (18a-c, 18d-f) of each part-body (16a, 16b) of the indexable cutting insert (10) are arranged with respect to one another such that the corner radius (26) of one main lip (18a-f) borders the material cutout, provided with the bevel (28), of the adjacent main lip (18a-f), arranged at an angle of 60° thereto, as seen in the direction around the bore axis (12).

4. Indexable cutting insert according to Claim 1, wherein the first end (32) of one main lip (18a-f) protrudes with respect to the second end (34) of the adjacent main lip (18a-f), as seen in the direction around the bore axis (12), such that the second end (34) of the adjacent main lip (18a-f) is spaced apart from an imaginary auxiliary plane (36) that extends through the first end (32) of the first-mentioned main lip (18a-f) and perpendicularly to the edge direction (30) thereof.

5. Tool for machining a workpiece, in particular for tangential slot milling, having a tool holder (42) which has at least one cutting insert receptacle (46') in which an indexable cutting insert (10) according to one of Claims 1 to 4 is releasably fastened.

6. Tool according to Claim 5, wherein the tool holder (42) is rotationally symmetrical about a rotation axis (44) of the tool holder (42) and the at least one cutting insert receptacle (46') is arranged circumferentially on the tool holder (42) and is configured as an insert pocket (46) for the indexable cutting insert (10), wherein the insert pocket (46) has a bottom face (68) and, perpendicularly thereto, a first and a second side wall (70a, 70b), wherein the indexable cutting insert (10) rests against the bottom face (48) with one of its end faces (16a, 16b) and bears against each side wall (70a, 70b) of the insert pocket (46) by means of at least one abutment surface (40a-f), and is fastened releasably in the insert pocket (46) by a fastening means (48), in particular a screw.

7. Tool according to Claim 6, wherein the indexable cutting insert (10) bears against the first side wall (70a) of the insert pocket (46) with at least one abutment surface (40a-c) of one part-body (16a) of the indexable cutting insert (10) and bears against the second side wall (70b) of the insert pocket (46) with at least one abutment surface (40d-f) of the other part-body (16b) of the indexable cutting insert (10).

8. Tool according to Claim 6, wherein the bottom face (68) of the insert pocket (46) is inclined at a defined first inclination angle about a first central axis located in the bottom face (68), said first central axis being oriented parallel to the rotation axis (44) of the tool holder (42).

9. Tool according to Claim 6, wherein the bottom face (68) of the insert pocket (46) is inclined at a defined second inclination angle (80) about a second central axis located in the bottom face (68), said second central axis being oriented parallel to the circumferential direction (56) of the tool holder (42).

10. Tool according to Claim 6, wherein the at least one indexable cutting insert (10) according to one of Claims 1 to 4 is arranged in the insert pocket (46) in a manner twisted through a defined lip twist angle (52, 52') about the radial direction (50) of the tool holder (42), such that the main lip (18a-f) used for machining encloses this lip twist angle (52, 52') with a plane (54) which is defined by the radial direction (50) and the rotation axis (44) of the tool holder (42).

11. Tool according to Claim 6, wherein the tool holder (42) has a multiplicity of insert pockets (46) in each of which an indexable cutting insert (10) according to one of Claims 1 to 4 is releasably fastened, wherein indexable cutting inserts (10) that are arranged in adjacent insert pockets (46) in the circumferential direction (56) differ in that the part-bodies (16a, 16b) thereof are twisted with respect to one another through the defined twist angle (22) by the same amount, but in different directions, about the bore axis (12).

## Revendications

1. Plaquette de coupe amovible pour un outil d'usinage d'une pièce par enlèvement de copeaux, dans laquelle la plaquette de coupe amovible (10) est symétrique par rotation de 120° autour d'un axe d'alésage (12), qui s'étend perpendiculairement et au centre à travers deux faces frontales opposées l'une à l'autre (20a, 20b) de la plaquette de coupe amovible (10), et présente deux corps partiels identiques (16a, 16b) assemblés l'un à l'autre, qui comprennent chacun trois tranchants principaux identiques (18a-c, 18d-f) disposés avec un angle de 60° l'un par rapport à l'autre et dans un plan, qui s'étendent parallèlement aux deux faces frontales opposées (20a, 20b) et en position gauche par rapport à l'axe d'alésage (12), dans laquelle les deux corps partiels (16a, 16b) sont d'une part configurés symétriquement l'un à l'autre par rapport à un plan de réflexion, qui est perpendiculaire à l'axe d'alésage (12) et qui se trouve à la même distance des deux faces frontales (20a, 20b), et sont d'autre part encore tournés en plus l'un par rapport à l'autre d'un angle de rotation défini (22) autour de l'axe d'alésage (12), dans laquelle les trois tranchants principaux (18a-c, 18d-f) de chaque corps partiel (16a, 16b) de la plaquette de coupe amovible (10) sont configurés en arêtes de coupe à la transition entre la face frontale (20a, 20b) du corps partiel respectif (16a, 16b) et respectivement une face de coupe (38a-f) disposée transversalement à la face frontale respective (20a, 20b), dans laquelle la face de coupe respective (38a-f) est inclinée d'un angle de coupe défini par rapport à l'axe d'alésage (12), **caractérisée en ce qu'**une face d'appui (40a-f) parallèle à l'axe d'alésage (12) est respectivement formée entre le plan de réflexion et les faces de coupe (38a-f) de chaque corps partiel (16a, 16b), et dans laquelle chaque arête de coupe (18a-f) est arrondie à l'extrémité à sa première extrémité (32) par un rayon d'angle (26) et présente à sa deuxième extrémité (34) opposée dans la direction de l'arête (30) une entaille matérielle munie d'un chanfrein (28).

2. Plaquette de coupe amovible selon la revendication 1, dans laquelle l'angle de rotation (22) est inférieur à 30°.

3. Plaquette de coupe amovible selon la revendication 1, dans laquelle les trois tranchants principaux (18a-c, 18d-f) de chaque corps partiel (16a, 16b) de la plaquette de coupe amovible (10) sont disposés l'un par rapport à l'autre, de telle manière que le rayon d'angle (26) d'un tranchant principal (18a-f) soit jointif à la découpe matérielle munie du chanfrein (28) du tranchant principal (18a-f) disposé avec un angle de 60° par rapport à celui-ci et voisin en regardant dans la direction tournant autour de l'axe d'alésage (12).

4. Plaquette de coupe amovible selon la revendication 1, dans laquelle la première extrémité (32) d'un tranchant principal (18a-f) est saillante par rapport à la deuxième extrémité (34) du tranchant principal (18a-f) voisin en regardant dans la direction tournant autour de l'axe d'alésage (12), de telle manière que la deuxième extrémité (34) du tranchant principal voisin (18a-f) soit espacée d'un plan auxiliaire imaginaire (36) passant par la première extrémité (32) du tranchant principal mentionné en premier lieu (18a-f) et s'étendant perpendiculairement à la direction d'arête de celui-ci (30).

5. Outil d'usinage d'une pièce par enlèvement de copeaux, en particulier pour le fraisage de rainures tangentielles, avec un porte-outil (42), qui présente au moins un logement de plaquette de coupe (46'), dans lequel une plaquette de coupe amovible (10) selon l'une quelconque des revendications 1 à 4 est fixée de façon démontable.

6. Outil selon la revendication 5, dans lequel le porte-outil (42) a la symétrie de rotation autour d'un axe de rotation (44) du porte-outil (42) et ledit au moins un logement de plaquette de coupe (46') est disposé en périphérie sur le porte-outil (42) et est configuré comme logette d'insertion (46) pour la plaquette de coupe amovible (10), dans lequel la logette d'insertion (46) présente une face de fond (68) et une première et une deuxième parois latérales (70a, 70b) perpendiculaires à celle-ci, dans lequel la plaquette de coupe amovible (10) s'applique par une de ses faces frontales (16a, 16b) sur la face de fond (68) et s'applique avec au moins une face d'appui (40a-f) sur chaque paroi latérale (70a, 70b) de la logette d'insertion (46) et est fixée de façon démontable dans la logette d'insertion (46) par un moyen de fixation (48), en particulier une vis.

7. Outil selon la revendication 6, dans lequel la plaquette de coupe amovible (10) s'applique avec au moins une face d'appui (40a-c) d'un corps partiel (16a) de la plaquette de coupe amovible (10) sur la première paroi latérale (70a) de la logette d'insertion (46) et s'applique avec au moins une face d'appui (40d-f) de l'autre corps partiel (16b) de la plaquette de coupe amovible (10) sur la deuxième paroi latérale (70b) de la logette d'insertion (46).

8. Outil selon la revendication 6, dans lequel la face de fond (68) de la logette d'insertion (46) est inclinée d'un premier angle d'inclinaison défini autour d'un premier axe central situé dans la face de fond (68), qui est orienté parallèlement à l'axe de rotation (44) du porte-outil (42).

9. Outil selon la revendication 6, dans lequel la face de fond (68) de la logette d'insertion (46) est inclinée d'un deuxième angle d'inclinaison défini (80) autour d'un deuxième axe central situé dans la face de fond (68), qui est orienté parallèlement à la direction périphérique (56) du porte-outil (42).

10. Outil selon la revendication 6, dans lequel ladite au moins une plaquette de coupe amovible (10) selon l'une quelconque des revendications 1 à 4 est disposée dans la logette d'insertion (46), en étant tournée d'un angle de rotation de tranchant défini (52, 52') autour de la direction radiale (50) du porte-outil (42), de telle manière que le tranchant principal (18a-f) utilisé pour l'usinage forme cet angle de rotation de tranchant (52, 52') avec un plan (54), qui est défini par la direction radiale (50) et l'axe de rotation (44) du porte-outil (42).

11. Outil selon la revendication 6, dans lequel le porte-outil (42) présente une multiplicité de logettes d'insertion (46), dans lesquelles une plaquette de coupe amovible (10) selon l'une quelconque des revendications 1 à 4 est respectivement fixée de façon démontable, dans lequel des plaquettes de coupe amovibles (10) disposées dans des logettes d'insertion (46) voisines dans la direction périphérique (56) se différencient par le fait que leurs corps partiels (16a, 16b) sont tournés l'un par rapport à l'autre de l'angle de rotation défini (22) de même grandeur mais dans des sens opposés autour de l'axe d'alésage (12).
